# EUROPÄISCHE PATENTSCHRIFT

(11) **EP 3 145 784 B1**
(45) Veröffentlichungstag und Bekanntmachung des Hinweises auf die Patenterteilung: **13.06.2018**
(21) Anmeldenummer: 15736188.2
(22) Anmeldetag: 24.04.2015
(51) Int. Cl.: B61D 15/00, E01B 27/00

(54) **SCHÜTTGUTVERLADEWAGEN**
BULK MATERIAL LOADING WAGON
WAGON DE CHARGEMENT DE MATÉRIAU EN VRAC

(30) Priorität: 20.05.2014 AT 3742014
(43) Veröffentlichungstag der Anmeldung: 29.03.2017
(73) Patentinhaber: Plasser & Theurer Export von Bahnbaumaschinen Gesellschaft m.b.H., 1010 Wien (AT)
(72) Erfinder: BRUNNINGER, Manfred, 4203 Altenberg (AT)
(86) Internationale Anmeldenummer: PCT/EP2015/000848
(87) Internationale Veröffentlichungsnummer: WO 2015/176794

(56) Entgegenhaltungen:
- EP-A1- 0 490 868
- EP-A1- 0 531 275
- US-A- 5 993 130
- US-B2- 7 192 238

## Beschreibung

Die Erfindung betrifft einen Schüttgutverladewagen für die Eingliederung in einen aus mehreren derartigen Wagen bestehenden Verladezug, mit einem oben offenen, an einem Wagenrahmen befestigten Speicherkasten zum Speichern von Schüttgut und mit einem diesem zugeordneten, im unteren Bereich des Speicherkastens und in Wagenlängsrichtung verlaufenden Bodenförderband, das unter Bildung zweier in Förderrichtung voneinander distanzierter Umlenkenden endlos ausgebildet ist und einen Förderantrieb aufweist, sowie mit einem im Winkel zum Bodenförderband angeordneten, ein an den Wagenrahmen angrenzendes unteres und ein vom Wagenrahmen weiter distanziertes oberes Umlenkende aufweisenden Übergabeförderband.

Derartige Schüttgutverladewagen sind bereits vielfach bekannt, beispielsweise durch US 5 993 130 oder US 7 192 238, und haben sich im Einsatz bestens bewährt.

Die Aufgabe der vorliegenden Erfindung liegt nun in der Schaffung eines Schüttgutverladewagens der eingangs genannten Art, mit dem ein verbesserter Einsatz möglich ist.

Diese Aufgabe wird erfindungsgemäß mit einem Schüttgutverladewagen der gattungsgemäßen Art dadurch gelöst, dass der Wagenrahmen zwischen zwei benachbarten Schienenfahrwerken eine Öffnung für eine Durchführung eines unteren, an das untere Umlenkende anschließenden Abschnittes des Übergabeförderbandes aufweist, und dass ein Antrieb für eine Verschiebung des Übergabeförderbandes in dessen Förder- bzw. Längsrichtung durch die Öffnung relativ zum Wagenrahmen vorgesehen ist.

Mit einer derartigen Verschiebbarkeit des Übergabeförderbandes kann mit einem Minimum an erforderlichen Umrüstarbeiten ein für eine Überstellfahrt nicht erlaubtes Vorkragen über den Wagenrahmen vermieden werden. Damit erübrigt sich ein bisher für die Überstellung des Schüttgutverladewagens erforderlicher Spezialwaggon für die Aufnahme des vorkragenden Abschnittes des Übergabeförderbandes.

Außerdem besteht die vorteilhafte Möglichkeit eines erweiterten Einsatzes des Übergabeförderbandes in dessen zurückgezogener Position. In dieser kann nunmehr unter Umkehr der Förderrichtung gespeichertes Schüttgut vom Bodenförderband direkt auf das Gleis eingebracht werden.

Weitere Vorteile der Erfindung ergeben sich aus den Unteransprüchen und der Zeichnungsbeschreibung.

Im Folgenden wird die Erfindung anhand eines in der Zeichnung dargestellten Ausführungsbeispieles näher beschrieben. Es zeigen: Fig. 1 und 2 je eine vergrößerte Seitenansicht eines Schüttgutverladewagens, und Fig. 3 einen schematisch vereinfachten Verladezug.

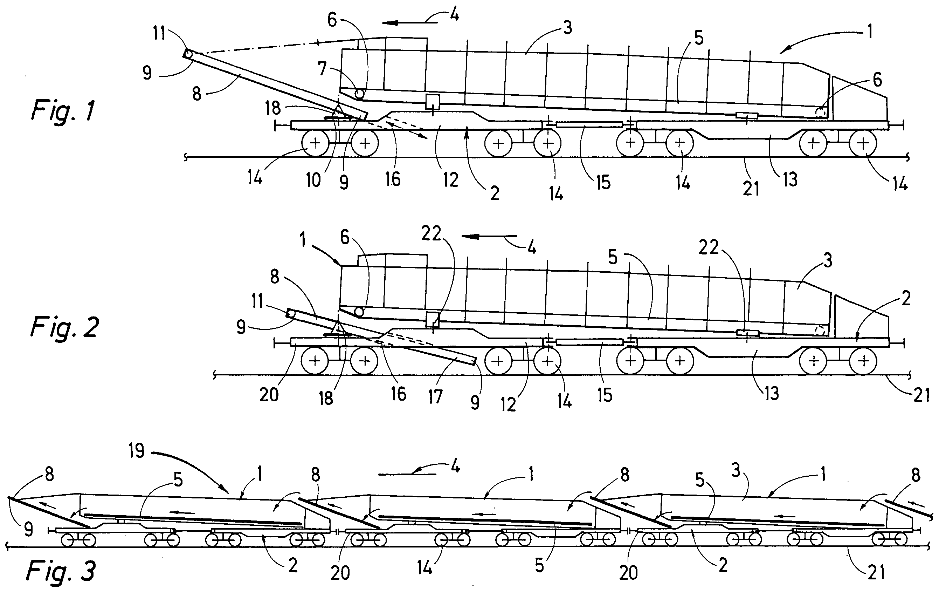

Ein in den Fig. 1 und 2 schematisch vereinfacht dargestellter Schüttgutverladewagen 1 weist einen auf einem Wagenrahmen 2 abgestützten, nach oben offenen Speicherkasten 3 zur Aufnahme und zum Speichern von Schüttgut auf. Im unteren Bereich des Speicherkastens 3 ist an Stelle einer Bodenfläche ein in einer in Förder- bzw. Wagenlängsrichtung 4 verlaufendes Bodenförderband 5 vorgesehen. Dieses ist unter Bildung zweier in Wagenlängs- bzw. Förderrichtung 4 voneinander distanzierter Umlenkenden 6 endlos ausgebildet und mit einem Förderantrieb 7 verbunden.

Unmittelbar vor dem - bezüglich der Förderrichtung 4 - vorderen Umlenkende 6 des Bodenförderbandes 5 ist ein im Winkel zu diesem positioniertes und über den Wagenrahmen 2 vorkragendes Übergabeförderband 8 vorgesehen. Dieses weist ein an den Wagenrahmen 2 angrenzendes unteres und ein vom Wagenrahmen 2 weiter distanziertes oberes Umlenkende 9 auf und ist durch eine Anlenkung 10 um eine vertikale Achse drehbar mit dem Wagenrahmen 2 verbunden. Ein mit dem Übergabeförderband 8 verbundener Förderantrieb 11 ist zur wahlweisen Umkehr der Förderrichtung 4 für das Schüttgut in Richtung zum oberen bzw. unteren Umlenkende 9 ausgebildet.

Der mit dem Speicherkasten 3 verbundene Wagenrahmen 2 besteht aus zwei in Wagenlängsrichtung hintereinander angeordneten Rahmenteilen 12, 13. Jeder dieser Rahmenteile 12, 13 weist zwei in der Wagenlängsrichtung voneinander distanzierte Schienenfahrwerke 14 auf, und beide Rahmenteile 12, 13 sind durch eine Kupplungsstange 15 gelenkig miteinander verbunden.

Der Wagenrahmen 2 weist zwischen zwei benachbarten Schienenfahrwerken 14 des vorderen Rahmenteiles 12 eine Öffnung 16 für eine Durchführung eines unteren, an das untere Umlenkende 9 anschließenden Abschnittes 17 des Übergabeförderbandes 8 auf (Fig. 2). Für diese Verschiebung des Übergabeförderbandes 8 in dessen Förder- bzw. Längsrichtung 4 durch die Öffnung 16 relativ zum Wagenrahmen 2 ist ein mit der Anlenkung 10 verbundener Antrieb 18 vorgesehen.

In Fig. 3 ist ein Verladezug 19 dargestellt, der sich aus einer beliebigen Anzahl von in Wagenlängsrichtung hintereinander angeordneten und aneinander gekuppelten Schüttgutverladewagen 1 zusammensetzt. Dadurch ist es möglich, gespeichertes Schüttgut über das Übergabeförderband 8 auf einen angrenzenden, vorgeordneten Schüttgutverladewagen 1 zu transportieren. Dazu befinden sich die Übergabeförderbänder 8 jeweils in der in Fig. 1 ersichtlichen ausgefahrenen Position, in der das obere Umlenkende 9 jeweils über ein vorderes Ende 20 des Wagenrahmens 2 vorkragt.

Wie in Fig. 2 ersichtlich, wurde das Übergabeförderband 8 mit Hilfe des Antriebes 18 eingezogen, indem der untere Abschnitt 17 durch die Öffnung 16 des vorderen Rahmenteiles 12 geführt wurde. In dieser Position ragt das obere Umlenkende 9 nicht mehr über das vordere Ende 20 des Wagenrahmens 2 vor.

In dieser Position ist wahlweise eine weitere Variante eines Arbeitseinsatzes möglich, indem durch Umkehr der Förderrichtung 4 des Übergabeförderbandes 8 - vom Bodenförderband 5 über dessen vorderes Umlenkende 6 abgeworfenes - Schüttgut über das untere Umlenkende 9 gezielt auf ein darunter befindliches Gleis 21 zu dessen Einschotterung abgeworfen werden kann.

Der Speicherkasten 3 stützt sich über zwei Abstützvorrichtungen 22 auf dem vorderen bzw. hinteren Wagenrahmen 2 ab. Die vordere Abstützvorrichtung 22 weist einen nicht näher dargestellten Antrieb auf, durch den der Speicherkasten 3 relativ zum vorderen Wagenrahmen 2 geringfügig höhenverstellbar ist. Damit kann das Übergabeförderband 8 in der in Fig. 1 dargestellten Position problemlos seitlich verschwenkt werden, um das gespeicherte Schüttgut seitlich neben dem Gleis entladen zu können.

## Patentansprüche

1. Schüttgutverladewagen (1) für die Eingliederung in einen aus mehreren derartigen Wagen bestehenden Verladezug (19), mit einem oben offenen, an einem Wagenrahmen (2) befestigten Speicherkasten (3) zum Speichern von Schüttgut und mit einem diesem zugeordneten, im unteren Bereich des Speicherkastens (3) und in Wagenlängsrichtung verlaufenden Bodenförderband (5), das unter Bildung zweier in Förderrichtung (4) voneinander distanzierter Umlenkenden (6) endlos ausgebildet ist und einen Förderantrieb (7) aufweist, sowie mit einem im Winkel zum Bodenförderband (5) angeordneten, ein an den Wagenrahmen (2) angrenzendes unteres und ein vom Wagenrahmen (2) weiter distanziertes oberes Umlenkende (9) aufweisenden Übergabeförderband (8), **dadurch gekennzeichnet, dass** der Wagenrahmen (2) zwischen zwei benachbarten Schienenfahrwerken (14) eine Öffnung (16) für eine Durchführung eines unteren, an das untere Umlenkende (9) anschließenden Abschnittes (17) des Übergabeförderbandes (8) aufweist, und dass ein Antrieb (18) für eine Verschiebung des Übergabeförderbandes (8) in dessen Förder- bzw. Längsrichtung (4) durch die Öffnung (16) relativ zum Wagenrahmen (2) vorgesehen ist.

2. Wagen nach Anspruch 1, **dadurch gekennzeichnet, dass** der Wagenrahmen (2) aus zwei in einer Wagenlängsrichtung hintereinander angeordneten Rahmenteilen (12, 13) zusammengesetzt ist, die jeweils mit zwei in der Wagenlängsrichtung voneinander distanzierten Schienenfahrwerken (14) verbunden sind, wobei die Öffnung (16) zur Durchführung des Übergabeförderbandes (8) zwischen den beiden Schienenfahrwerken (14) des mit dem Übergabeförderband (8) verbundenen Rahmenteiles (12) angeordnet ist.

3. Wagen nach Anspruch 1 oder 2, **dadurch gekennzeichnet, dass** ein mit dem Übergabeförderband (8) verbundener Förderantrieb (11) zur wahlweisen Umkehr der Förderrichtung (4) für das Schüttgut in Richtung zum oberen bzw. unteren Umlenkende (9) ausgebildet ist.

## Claims

1. A bulk material loading wagon (1) for incorporation into a loading train (19) consisting of several such wagons, including a storage box (3) for storing bulk material, the storage box being open at the top and fastened to a wagon frame (2), and - associated with the storage box - a bottom conveyor belt (5), extending in the lower region of the storage box (3) and in the longitudinal direction of the wagon, which is designed endless while forming two deflection ends (6) spaced from one another in the conveying direction (4) and has a conveying drive (7), and further including a transfer conveyor belt (8) arranged at an angle to the bottom conveyor belt (5), the transfer conveyor belt having a lower deflection end (9) adjoining the wagon frame (2) and an upper deflection end (9) spaced farther from the wagon frame (2), **characterized in that**, between two adjacent on-track undercarriages (14), the wagon frame (2) has an opening (16) for passage of a lower section (17) - adjoining the lower deflection end (9) - of the transfer conveyor belt (8), and that a drive (18) is provided for displacement of the transfer conveyor belt (8) in its conveying- or longitudinal direction (4) through the opening (16) relative to the wagon frame (2).

2. A wagon according to claim 1, **characterized in that** the wagon frame (2) is composed of two frame parts (12, 13), arranged one following the other in a longitudinal direction of the wagon, each of which is connected to two on-track undercarriages (14) spaced from one another in the longitudinal direction of the wagon, wherein the opening (16) for passage of the transfer conveyor belt (8) is arranged between the two on-track undercarriages (14) of the frame part (12) connected to the transfer conveyor belt (8).

3. A wagon according to claim 1 or 2, **characterized in that** a conveying drive (11) connected to the transfer conveyor belt (8) is designed for selective reversal of the conveying direction (4) for the bulk material in the direction towards the upper or the lower deflection end (9).

## Revendications

1. Wagon de chargement de marchandise en vrac (1) pour l'incorporation dans un train de chargement (19) constitué de plusieurs tels wagons, avec une caisse de stockage (3) ouverte en haut, fixée à un châssis de wagon (2) pour le stockage de marchandise en vrac et avec une bande transporteuse au sol (5) associée à celle-ci, s'étendant dans la région inférieure de la caisse de stockage (3) et dans la direction longitudinale de wagon qui est réalisée sans fin en formant deux extrémités de renvoi (6) écartées l'une de l'autre dans la direction de transport (4) et présente un entraînement de transport (7), ainsi qu'avec une bande transporteuse de transfert (8) disposée de manière angulaire par rapport à la bande transporteuse au sol (5), présentant une extrémité de renvoi inférieure (9) adjacente au châssis de wagon (2) et une extrémité de renvoi supérieure (9) davantage écartée du châssis de wagon (2), **caractérisé en ce que** le châssis de wagon (2) présente une ouverture (16) pour un passage d'une section inférieure (17) de la bande transporteuse de transfert (8), subséquente à l'extrémité de renvoi inférieure (9), entre deux mécanismes de roulement ferroviaires voisins (14), et qu'un entraînement (18) est prévu pour un décalage de la bande transporteuse de transfert (8) dans sa direction de transport ou longitudinale (4) à travers l'ouverture (16) par rapport au châssis de wagon (2).

2. Wagon selon la revendication 1, **caractérisé en ce que** le châssis de wagon (2) est composé de deux parties de châssis (12, 13) disposées l'une derrière l'autre dans une direction longitudinale de wagon qui sont chacune reliées à deux mécanismes de roulement ferroviaires (14) écartés l'un de l'autre dans la direction longitudinale de wagon, dans lequel l'ouverture (16) pour le passage de la bande transporteuse de transfert (8) est disposée entre les deux mécanismes de roulement ferroviaires (14) de la partie de châssis (12) reliée à la bande transporteuse de transfert (8).

3. Wagon selon la revendication 1 ou 2, **caractérisé en ce qu'**un entraînement de transport (11) relié à la bande transporteuse de transfert (8) est réalisé pour l'inversion sélective de la direction de transport (4) pour la marchandise en vrac en direction de l'extrémité de renvoi supérieure ou inférieure (9).
